(19) Europäisches Patentamt
European Patent Office
Office européen des brevets

(11) **EP 4 760 953 A1**

(12) **EUROPEAN PATENT APPLICATION**
published in accordance with Art. 153(4) EPC

(43) Date of publication:
**17.06.2026 Bulletin 2026/25**

(21) Application number: **23948688.9**

(22) Date of filing: **11.08.2023**

(51) International Patent Classification (IPC):
**H01M 50/449** (2021.01)     **H01M 50/46** (2021.01)
**H01M 50/414** (2021.01)

(52) Cooperative Patent Classification (CPC):
**H01M 50/414; H01M 50/449; H01M 50/46;**
**Y02E 60/10**

(86) International application number:
**PCT/CN2023/112469**

(87) International publication number:
**WO 2025/035243 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Ningde Amperex Technology Limited
Ningde, Fujian 352100 (CN)**

(72) Inventors:
• **FAN, Xiaohe
  Ningde, Fujian 352100 (CN)**
• **WEI, Zengbin
  Ningde, Fujian 352100 (CN)**
• **TAO, Xinghua
  Ningde, Fujian 352100 (CN)**

(74) Representative: **Kraus & Lederer PartGmbB
Thomas-Wimmer-Ring 15
80539 München (DE)**

(54) **SEPARATOR, SECONDARY BATTERY, ELECTROCHEMICAL DEVICE, AND ELECTRIC DEVICE**

(57)     A separator is provided, including a base film and an organic coating disposed on one surface of the base film. The organic coating contains a first polymer and a second polymer. A melting point T of the first polymer satisfies 60°C ≤ T ≤ 100°C, and a swelling degree D of the second polymer during placement in a solution at 60°C for 24 h satisfies D ≤ 30%. The first polymer maintains the adhesion force requirements during the battery charge-discharge cycling. When the battery generates heat during charging and discharging, the first polymer softens relatively easily, reducing adhesion force, which allows the interface between the separator and the battery electrode plate to open, helping to reduce heat accumulation and improve the safety performance of a hot box of a cell. The second polymer, with a relatively low swelling degree, can maintain the original morphology in the cell, effectively alleviating the issue of the low-melting-point first polymer melting into a film during the hot-pressing process of the cell, thereby improving the cycling performance of the cell. This application further provides a secondary battery, an electrochemical device, and an electric device.

FIG. 1

**Description**

**TECHNICAL FIELD**

This application relates to a separator, a secondary battery containing such separator, an electrochemical device, and an electric device containing such secondary battery or electrochemical device.

**BACKGROUND TECHNOLOGY**

The rapid increase in charging rate of cells and in energy density of cells is detrimental to increasing the hot box window (a safety temperature at which a charged cell during placement in a hot box for testing does not catch fire, explode, or emit smoke) of the cells. To increase the hot box window of the battery cells and improve the safety performance of the cells, two approaches are commonly used: adjusting the solvent system of the electrolyte or applying a polyvinylidene fluoride coating with low adhesion performance onto the separator. However, adjusting the electrolyte system degrades the cycling performance of the cell and poses a risk of deteriorating low-temperature performance of the cell. Meanwhile, using a polyvinylidene fluoride coating with excessively low adhesion force leads to deformation of the battery cell, which adversely affects high-temperature storage performance of the cell.

**SUMMARY**

In view of this, a first aspect of this application provides a separator, including:

a base film; and
an organic coating disposed on one surface of the base film, the organic coating containing a first polymer and a second polymer; where
a melting point T of the first polymer satisfies $60°C \leq T \leq 100°C$; and
a swelling degree D of the second polymer during placement in an electrolyte at 60°C for 24 h satisfies $D \leq 30\%$, where the electrolyte has a mass ratio of lithium hexafluorophosphate, ethylene carbonate, diethyl carbonate, propylene carbonate, and propyl propionate of 8.7:20:30:20:30.

In the separator provided in the first aspect, the first polymer can maintain the adhesion force requirements during the battery charge-discharge cycling and improve high-temperature storage performance. When the battery generates heat during charging and discharging, the first polymer with a low melting point softens relatively easily, significantly reducing adhesion force, which allows the interface between the separator and the battery electrode plate (the positive electrode plate) to open, helping to reduce heat accumulation and improve the safety performance of a hot box of a cell. The second polymer, with a relatively low swelling degree D, can maintain the original morphology in the cell without clogging the pores of the base film, effectively alleviating the issue of the low-melting-point first polymer melting into a film during the hot-pressing process of the cell, thereby improving the cycling performance of the cell.

With reference to the first aspect, in some embodiments, in the organic coating, a weight percentage of the first polymer is greater than or equal to 40% and less than or equal to 95%, and a weight percentage of the second polymer is less than or equal to 50%.

It can be seen that in this application, rationally formulating the ratio of the first polymer to the second polymer increases the hot box test window of the cell while ensuring the performance of the cell. A higher percentage of the first polymer results in a better high-temperature failure effect, but an excessively high percentage is likely to cause the pores of the separator to be clogged, leading to decreased kinetic performance and degraded cycling performance of the cell. A higher percentage of the second polymer results in better cycling performance of the cell, but an excessively high percentage results in excessively low adhesion force of the separator at room temperature, which is likely to lead to degraded high-temperature storage performance, risk of deformation in the battery cell, and reduced cycling performance.

With reference to the first aspect, in some embodiments, in the organic coating, a weight percentage of the first polymer is greater than or equal to 60% and less than or equal to 95%, and a weight percentage of the second polymer is less than or equal to 30%.

With reference to the first aspect, in some embodiments, when the separator is applied to an electrochemical battery cell, the swelling degree D of the second polymer and a percentage H of linear carboxylate esters in the electrolyte satisfy $D = K*H + 0.1$, where $0.01 \leq K \leq 0.08$.

With reference to the first aspect, in some embodiments, $10\% \leq H \leq 50\%$.

It can be seen that by adjusting the ratio of the first polymer to the second polymer and the percentage of linear carboxylate esters in the electrolyte, the hot box test pass rate can be improved while ensuring the performance of the cell.

With reference to the first aspect, in some embodiments, a median particle size $D_v50$ of the first polymer satisfies

$1.0 \, \mu m \leq D_v 50 \leq 2 \, \mu m$.

It can be seen that when the particle size of the first polymer is too large, the adhesion of the organic coating degrades, and its thickness increases, resulting in a relatively low volumetric energy density of the cell. If the particle size of the first polymer is too small, it may cause pore clogging in the separator, leading to degraded cycling performance of the battery. In this application, by setting an appropriate particle size range for the first polymer, the adhesion and appropriate thickness of the organic coating can be ensured.

With reference to the first aspect, in some embodiments, the melting point T of the first polymer satisfies $60°C \leq T \leq 85°C$.

With reference to the first aspect, in some embodiments, the second polymer is spherical or quasi-spherical, and a sphericity R of the second polymer satisfies $0.7 \leq R < 1$.

With reference to the first aspect, in some embodiments, the second polymer is spherical or quasi-spherical, and a sphericity R of the second polymer satisfies $0.8 \leq R < 1$.

It can be seen that a high sphericity of the second polymer allows for a relatively low usage amount of the second polymer while achieving a good effect. The spherical or quasi-spherical second polymer has a relatively low packing density in the organic coating, which increases the porosity of the organic coating and improves the cycling performance of the cell.

With reference to the first aspect, in some embodiments, the swelling degree D of the second polymer during placement in the electrolyte at 85°C for 24 h satisfies $10\% \leq D \leq 50\%$.

It can be seen that in this application, selecting a second polymer with a low swelling degree ensures that when the separator is applied to a cell, the second polymer can maintain the original morphology even at elevated temperatures. Additionally, the second polymer has a higher melting point relative to the first polymer, for example, a melting point higher than 130°C, capable of maintaining the original morphology in the cell without clogging the pores of the base film. This effectively alleviates the issue of the low-melting-point first polymer melting into a film during the hot-pressing process of the cell, improving the cycling performance of the cell. The selection of different swelling degrees is achieved by choosing different material types, molecular weights, or degrees of crosslinking.

With reference to the first aspect, in some embodiments, the first polymer includes a graft copolymer, where a monomer of a polymer backbone in the graft copolymer includes at least one of ethylene, propylene, vinylidene fluoride, acrylic acid, acrylate, styrene, acrylonitrile, maleic anhydride, vinyl chloride, or chloropropene, and a monomer used for grafting includes at least one of maleic anhydride, acrylate, or acrylic acid; and a weight percentage of the graft copolymer in the first polymer is greater than or equal to 3% and less than or equal to 10%.

With reference to the first aspect, in some embodiments, the second polymer includes a polymer of at least one monomer of vinylidene fluoride, hexafluoropropylene, propylene, vinyl chloride, styrene, butadiene, acrylate, or acrylic acid, and the second polymer is at least one of a homopolymer, copolymer, or blended polymer.

A second aspect of this application provides a secondary battery including a positive electrode plate, a negative electrode plate, and the above-described separator disposed between the positive electrode plate and the negative electrode plate, where the organic coating is located between the positive electrode plate and the base film.

A third aspect of this application provides an electrochemical device including a positive electrode plate, a negative electrode plate, and the above-described separator disposed between the positive electrode plate and the negative electrode plate, where the organic coating is located between the positive electrode plate and the base film.

A fourth aspect of this application provides an electric device including the above-described secondary battery or the above-described electrochemical device.

DESCRIPTION OF DRAWINGS

FIG. 1 is a schematic structural diagram of a separator according to an embodiment of this application.

FIG. 2 is a schematic diagram of a working mechanism of a separator according to an embodiment of this application.

Description of main component symbols:

| | |
|---|---|
| Separator | 10 |
| Base film | 11 |
| Organic coating | 13 |
| Inorganic coating | 15 |
| Another organic coating | 17 |

(continued)

| | |
|---|---|
| Positive electrode plate | 20 |
| Negative electrode plate | 30 |

## DETAILED DESCRIPTION

Some embodiments of this application are described below with reference to the accompanying drawings in these embodiments of this application.

The separator is a critical component in a battery, serving as a layer of separating film material placed between the positive electrode and negative electrode of the battery, directly impacting the safety performance and cost of the battery. The primary function of the separator is to separate the positive electrode and negative electrode, preventing electrons in the battery from freely passing through while allowing ions in the electrolyte to pass freely.

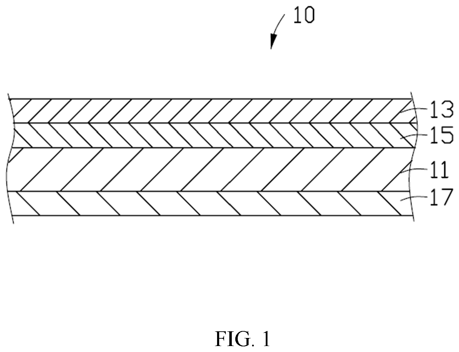

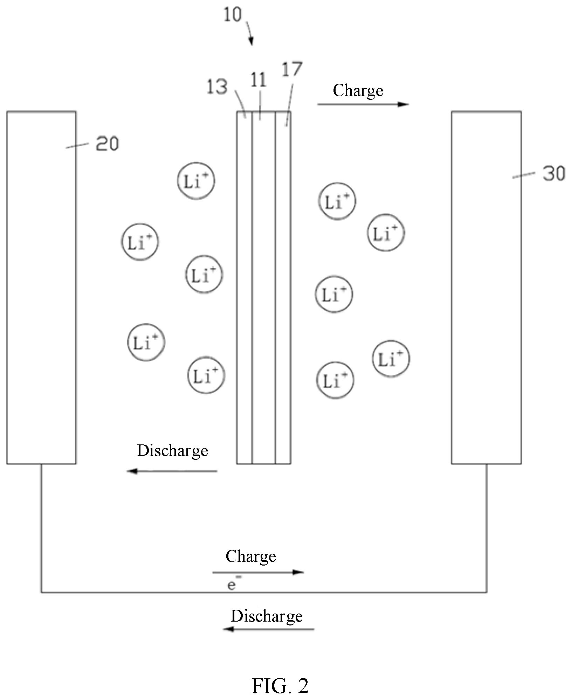

This application provides a separator for a secondary battery, effectively increasing the hot box window of the battery cell, and improving the safety performance of the cell. Referring to FIG. 1, a separator 10 includes a base film 11 and an organic coating 13 disposed on one surface of the base film 11. Referring to FIG. 2, during use, the side of the separator 10 with the organic coating 13 faces a positive electrode plate 20. The organic coating 13 contains a first polymer and a second polymer.

This application imposes no specific restrictions on the type of the base film 11, as long as it achieves the objectives of this application. The base film 11 may be made of a material stable in the electrolyte, such as resin, glass fiber, or inorganic material. In some embodiments, the base film 11 includes a porous sheet or non-woven fabric with excellent electrolyte retention performance. Examples of materials for resin or glass fiber separator base films may include, but are not limited to, polyolefin, aromatic polyamide, polytetrafluoroethylene, and polyethersulfone. Taking polyolefin as an example, the material of the base film 11 may be selected from one or more of polypropylene and polyethylene.

This application does not limit the thickness of the base film 11, as long as it achieves the objectives of this application. For example, the thickness of the base film 11 may be 5 $\mu$m-50 $\mu$m, preferably 5 $\mu$m-30 $\mu$m.

In this application, a melting point T of the first polymer is low, satisfying $60°C \le T \le 100°C$. Further, in some embodiments, the melting point T of the first polymer satisfies $60°C \le T \le 85°C$.

The first polymer provides viscosity to the organic coating 13. At a temperature below the melting point (for example, room temperature), the first polymer exhibits high adhesion force performance, maintaining the adhesion force requirements during the battery charge-discharge cycling and improving the high-temperature storage performance of the battery. In this application, a first polymer with a low melting point is selected so that, when the battery generates heat during charging and discharging, for example, when the temperature reaches or exceeds the melting point T, the low-melting-point first polymer softens relatively easily and becomes fluid, significantly reducing adhesion force. This allows the interface between the separator and the positive electrode plate to open, helping to reduce heat accumulation and improve the safety performance of the hot box of the cell.

When the particle size of the first polymer is too large, the adhesion of the organic coating 13 degrades, and its thickness increases, resulting in a relatively low volumetric energy density of the cell. If the particle size of the first polymer is too small, it may cause pore clogging in the separator, leading to degraded cycling performance of the battery. In this application, a median particle size $D_v50$ of the first polymer satisfies $0.8\ \mu m < D_v50 < 2\ \mu m$. In some embodiments, a median particle size $D_v50$ of the first polymer satisfies $1.0\ \mu m \le D_v50 \le 2\ \mu m$. By setting the first polymer within an appropriate particle size range, the adhesion and appropriate thickness of the organic coating 13 can be ensured.

When the separator 10 is applied to a battery, the electrolyte infiltrates the porous structure of the separator 10, and the organic coating is equivalently immersed in the electrolyte. A swelling degree D of the second polymer during placement in the electrolyte at 60°C for 24 h satisfies $D \le 30\%$, where the electrolyte has a mass ratio of lithium hexafluorophosphate, ethylene carbonate, diethyl carbonate, propylene carbonate, and propyl propionate of 8.7:20:30:20:30.

Further, in some embodiments, the swelling degree D of the second polymer during placement in the electrolyte at 85°C for 24 h satisfies $10\% \le D \le 50\%$. In this application, the swelling degree is defined as the ratio of the volume of the polymer after swelling to its volume before swelling, minus 1 when polymer molecules adsorb solvent molecules and reach swelling equilibrium. Typically, the swelling degree of a polymer is related to polymer material composition, molecular weight, molecular chain length, and degree of crosslinking. This application ensures the swelling degree of the second polymer by selecting an appropriate material composition, a large molecular weight, a long molecular chain, or high-degree molecular chain crosslinking.

In this application, a second polymer with high strength and low swelling degree is selected, ensuring that when the separator 10 is applied to a cell, the second polymer can maintain the original morphology. Additionally, the second polymer has a higher melting point relative to the first polymer, for example, a melting point higher than 130°C, capable of maintaining the original morphology in the cell without clogging the pores of the base film 11. This effectively alleviates the issue of the low-melting-point first polymer melting into a film during the hot-pressing process of the cell, improving the cycling performance of the battery cell.

The second polymer in the separator 10 is spherical or quasi-spherical, and the sphericity R of the second polymer satisfies $0.7 \leq R \leq 1.0$. Further, in some embodiments, the sphericity R of the second polymer satisfies $0.8 \leq R \leq 1.0$. A high sphericity of the second polymer allows for a relatively low usage amount of the second polymer in the organic coating 13 while achieving a good effect, and the spherical or quasi-spherical second polymer has a relatively low packing density in the organic coating 13, increasing the porosity of the organic coating and improving the cycling performance of the cell.

As the battery temperature rises, the first polymer softens relatively easily and loses adhesion, while the second polymer, due to its relatively high melting point, does not soften and retains its rigid granular form.

A higher percentage of the first polymer results in a better high-temperature failure effect, but an excessively high percentage is likely to cause the pores of the separator 10 to be clogged, leading to decreased kinetic performance and degraded cycling performance of the cell.

A higher percentage of the second polymer results in better cycling performance of the cell, but an excessively high percentage results in worse adhesion force of the separator at room temperature, which is likely to lead to degraded high-temperature storage performance and a risk of deformation during cycling.

Therefore, it is necessary to rationally formulate the ratio of the first polymer to the second polymer to increase the hot box test window of the cell while ensuring performance of the cell. In this application, in the organic coating 13, a weight percentage of the first polymer is greater than or equal to 40% and less than or equal to 95%, and a weight percentage of the second polymer is less than or equal to 50%. Further, in some embodiments, in the organic coating 13, a weight percentage of the first polymer is greater than or equal to 60% and less than or equal to 95%, and a weight percentage of the second polymer is less than or equal to 30%.

In this application, in the organic coating 13, the weight percentage of the second polymer is greater than or equal to 10%.

Additionally, a higher percentage of linear carboxylate esters in the electrolyte results in better performance of the cell, but an excessively high percentage leads to excessive polymer swelling, clogging the pores of the separator and degrading the performance of the cell. When the separator is applied to a battery cell, the weight percentage of linear carboxylate esters in the electrolyte is H, where $10\% \leq H \leq 50\%$.

In this application, the swelling degree D of the second polymer and a percentage H of linear carboxylate esters in the electrolyte satisfy $D = K*H + 0.1$, where $0.01 \leq K \leq 0.08$.

Thus, by adjusting the ratio of the first polymer to the second polymer and the percentage of linear carboxylate esters in the electrolyte, the upper limit of the hot box test window can be increased while ensuring the performance of the cell.

$D_v10$ of the first polymer satisfies $0.1\ \mu m \leq D_v10 \leq 0.7\ \mu m$, and $D_v90$ satisfies $2\ \mu m \leq D_v90 \leq 5\ \mu m$.

$D_v10$ of the second polymer satisfies $0.1\ \mu m \leq D_v10 \leq 0.5\ \mu m$, $D_v50$ satisfies $0.5\ \mu m \leq D_v50 \leq 2\ \mu m$, and $D_v90$ satisfies $2\ \mu m \leq D_v90 \leq 5\ \mu m$. The ratio S of the $D_v90$ of the second polymer to the $D_v90$ of the first polymer satisfies $0.6 \leq S \leq 1.0$.

In some embodiments, the first polymer includes a polymer of at least one monomer ethylene, propylene, vinylidene fluoride, acrylic acid, acrylate, styrene, acrylonitrile, maleic anhydride, vinyl chloride, or chloropropene. The first polymer is at least one of a homopolymer, copolymer, or blended polymer.

In some embodiments, the first polymer includes a graft copolymer, where a monomer of a polymer backbone in the graft copolymer includes at least one of ethylene, propylene, vinylidene fluoride, acrylic acid, acrylate, styrene, acrylonitrile, maleic anhydride, vinyl chloride, or chloropropene, and a monomer used for grafting includes at least one of maleic anhydride, acrylate, or acrylic acid.

In some embodiments, when the first polymer contains a graft copolymer, a weight percentage of the graft copolymer in the first polymer is greater than or equal to 3% and less than or equal to 10%.

In some embodiments, the second polymer includes a polymer of at least one monomer of vinylidene fluoride, hexafluoropropylene, propylene, vinyl chloride, styrene, butadiene, acrylate, or acrylic acid, and the second polymer is at least one of a homopolymer, copolymer, or blended polymer.

In some embodiments, the average molecular weight of the first polymer is greater than or equal to 300,000 and less than or equal to 1,000,000. The average molecular weight of the second polymer is greater than or equal to 800,000 and less than or equal to 2,000,000.

It can be understood that, optionally, the organic coating, in addition to containing the first polymer and the second polymer described above, also contains auxiliary components, with the weight percentage of the auxiliary components in the organic coating not exceeding 10%. The auxiliary components may include the conventional thickener and wetting agents. The thickener may be sodium carboxymethyl cellulose or lithium carboxymethyl cellulose, with a weight percentage thereof in the organic coating being possibly 0.5%-1.5%. The wetting agents may include sulfonate and dimethylsilane, with a weight percentage thereof in the organic coating being possibly 1%-10%.

In some embodiments, the weight of the organic coating on the base film is greater than or equal to 0.5 mg/5000 mm$^2$ and less than or equal to 3 mg/5000 mm$^2$. The thickness of the organic coating is greater than or equal to 0.5 $\mu$m and less than or equal to 5 $\mu$m. Further, in some embodiments, the weight of the organic coating on the base film is greater than or equal to 0.5 mg/5000 mm$^2$ and less than or equal to 1.5 mg/5000 mm$^2$.

Optionally, in some embodiments, as shown in FIG. 1, the separator 10 further includes an inorganic coating 15 disposed between the base film 11 and the organic coating 13. The inorganic coating 15 is used to enhance the heat resistance and mechanical strength of the separator 10. The inorganic coating 15 includes ceramics, which include at least one of aluminum oxide, boehmite, titanium dioxide, silicon dioxide, zirconium dioxide, tin dioxide, magnesium hydroxide, magnesium oxide, zinc oxide, barium sulfate, boron nitride, or aluminum nitride.

It can be understood that, as shown in FIG. 1 and FIG. 2, the separator 10 further includes another organic coating 17 disposed on the other surface of the base film 11. The another organic coating 17 and the above-described organic coating 13 are respectively disposed on opposite surfaces of the base film 11, meaning that the another organic coating 17 is disposed on the surface of the base film 11 facing the negative electrode plate 30. This application imposes no specific restrictions on the type of the another organic coating 17, as long as it can serve to bond the separator to the negative electrode. In some embodiments, the another organic coating 17 mainly contains a binder and a thickener.

Referring to FIG. 2, this application also provides an electrochemical device including the positive electrode plate 20, the negative electrode plate 30, an electrolyte, and the above-described separator 10 disposed between the positive electrode plate 20 and the negative electrode plate 30. The organic coating 13 is disposed on the surface of the base film 11 facing the positive electrode plate 20, that is, located between the positive electrode plate 20 and the base film 11, to bond the positive electrode plate 20 to the separator 10. The electrochemical device may be a secondary battery. The electrolyte infiltrates the separator 10. FIG. 2 is illustrative, and the separator 10 is not shown in a state of being bonded to the positive electrode plate 20 and the negative electrode plate 30. The positive electrode plate, negative electrode plate, and electrolyte of the electrochemical device may adopt types well-known in the art.

[Positive electrode plate]

The positive electrode plate includes a positive electrode current collector and a positive electrode film layer disposed on at least one surface of the positive electrode current collector. As an example, the positive electrode current collector has two opposing surfaces along its thickness direction, and the positive electrode film layer is disposed on either or both of the two opposing surfaces of the positive electrode current collector. The positive electrode film layer includes a positive electrode active material.

In some embodiments, the positive electrode current collector may be a metal foil or a composite current collector. For example, as a metal foil, aluminum foil may be used. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, or the like) on a polymer material substrate (such as polypropylene (PP), polyethylene terephthalate (PET), polybutylene terephthalate (PBT), polystyrene (PS), or polyethylene (PE)).

In some embodiments, the positive electrode active material may be a positive electrode active material known in the art for batteries. As an example, the positive electrode active material may include one or more of the following materials: lithium-containing phosphate with an olivine structure, lithium transition metal oxide, and their respective modified compounds. However, this application is not limited to these materials, and other conventional materials that can be used as positive electrode active materials for batteries may also be used. These positive electrode active materials may be used alone or in combination of two or more. Examples of the lithium transition metal oxide may include, but are not limited to, one or more of lithium cobalt oxide (for example, $LiCoO_2$), lithium nickel oxide (for example, $LiNiO_2$), lithium manganese oxide (for example, $LiMnO_2$, $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (also referred to as $NCM_{333}$), $LiNi_{0.5}Co_{0.2}Mn_{0.3}O_2$ (also referred to as $NCM_{523}$), $LiNi_{0.5}Co_{0.25}Mn_{0.25}O_2$ (also referred to as $NCM_{211}$), $LiNi_{0.6}Co_{0.2}Mn_{0.2}O_2$ (also referred to as $NCM_{622}$), $LiNi_{0.8}Co_{0.1}Mn_{0.1}O_2$ (also referred to as $NCM_{811}$), lithium nickel cobalt aluminum oxide (for example, $LiNi_{0.85}Co_{0.15}Al_{0.05}O_2$), and their modified compounds. Examples of the lithium-containing phosphate with an olivine structure may include, but are not limited to, one or more of lithium iron phosphate (for example, $LiFePO_4$ (also referred to as LFP)), lithium iron phosphate-carbon composite, lithium manganese phosphate (for example, $LiMnPO_4$), lithium manganese phosphate-carbon composite, lithium manganese iron phosphate, and lithium manganese iron phosphate-carbon composite.

In some embodiments, the positive electrode film layer further optionally includes a binder. As an example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode film layer further optionally includes a conductive agent. As an example, the conductive agent may include one or more of superconducting carbon, acetylene black, carbon black, Ketjen black, carbon dots, carbon nanotubes, graphene, and carbon nanofibers.

In some embodiments, the positive electrode plate can be prepared by the following method: dispersing components for preparing the positive electrode plate, such as the positive electrode active material, conductive agent, binder, and any other components, in a solvent (for example, N-methylpyrrolidone) to form a positive electrode slurry; applying the positive electrode slurry to the positive electrode current collector, followed by processes such as drying and cold pressing, to obtain a positive electrode plate.

[Negative electrode plate]

The negative electrode plate includes a negative electrode current collector and a negative electrode film layer disposed on at least one surface of the negative electrode current collector, where the negative electrode film layer includes a negative electrode active material.

As an example, the negative electrode current collector has two opposing surfaces along its thickness direction, and the negative electrode film layer is disposed on either or both of the two opposing surfaces of the negative electrode current collector.

In some embodiments, the negative electrode current collector may be a metal foil or a composite current collector. For example, as a metal foil, copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (such as polypropylene (PP), polyethylene terephthalate (PET), polybutylene terephthalate (PBT), polystyrene (PS), or polyethylene (PE)).

In some embodiments, the negative electrode active material may be a negative electrode active material known in the art for batteries. As an example, the negative electrode active material may include one or more of the following materials: artificial graphite, natural graphite, soft carbon, hard carbon, silicon-based material, tin-based material, and lithium titanate. The silicon-based material may be selected from one or more of elemental silicon, silicon-oxygen compound, silicon-carbon composite, silicon-nitrogen composite, and silicon alloy. The tin-based material may be selected from one or more of elemental tin, tin-oxygen compound, and tin alloy. However, this application is not limited to these materials, and other conventional materials that can be used as negative electrode active materials for batteries may also be used. These negative electrode active materials may be used alone or in combination of two or more.

In some embodiments, the negative electrode film layer further optionally includes a binder. The binder may be selected from one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from one or more of superconducting carbon, acetylene black, carbon black, Ketjen black, carbon dots, carbon nanotubes, graphene, and carbon nanofibers.

In some embodiments, the negative electrode film layer further optionally includes other additives, such as a thickener (for example, sodium carboxymethyl cellulose (CMC-Na)).

In some embodiments, the negative electrode plate can be prepared by the following method: dispersing components for preparing the negative electrode plate, such as the negative electrode active material, conductive agent, binder, and any other components, in a solvent (for example, deionized water) to form a negative electrode slurry; applying the negative electrode slurry to the negative electrode current collector, followed by drying and cold pressing to obtain the negative electrode plate.

[Electrolyte]

The electrolyte serves to conduct ions between the positive electrode plate and the negative electrode plate. This application imposes no specific restrictions on the type of the electrolyte, which can be selected according to requirements, including electrolytic salt and solvents.

In some embodiments, the electrolytic salt may be selected from one or more of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be selected from one or more of ethylene carbonate, ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate (PP), methyl butyrate, ethyl butyrate, 1,4-butyrolactone, sulfolane, dimethyl sulfone, methyl ethyl sulfone, and diethyl sulfone.

In some embodiments, the electrolyte may optionally include additives. For example, the additives may include a negative electrode film-forming additive, a positive electrode film-forming additive, and additives that improve certain battery performances, such as additives for improving overcharge performance of the battery, additives for improving high-temperature performance or low-temperature performance of the battery.

In some embodiments, the positive electrode plate, negative electrode plate, and separator can be formed into an electrode assembly through a winding process or a lamination process.

In some embodiments, the secondary battery may include an outer package. The outer package may be used to encapsulate the above-described electrode assembly and electrolyte.

In some embodiments, the outer package of the secondary battery may be a hard shell, such as a hard plastic shell, aluminum shell, or steel shell. The outer package of the secondary battery may alternatively be a soft package, such as a pouch-type soft package. The material of the soft package may be plastic, such as polypropylene, polybutylene terephthalate, or polybutylene succinate.

This application further provides a secondary battery including a positive electrode plate, a negative electrode plate, and a separator disposed between the positive electrode plate and the negative electrode plate. Further, this application provides an electrochemical device including a positive electrode plate, a negative electrode plate, and a separator disposed between the positive electrode plate and the negative electrode plate.

This application further provides an electric device using the above-described electrochemical device (the secondary battery) as a power source. The electric device may include, but is not limited to, mobile phones, tablets, laptops, electric toys, electric tools, electric bicycles, electric vehicles, ships, and spacecraft. Electric toys may include fixed or mobile electric toys, such as game consoles, electric car toys, electric ship toys, and electric airplane toys. Spacecraft may include airplanes, rockets, space shuttles, and spaceships.

The technical solutions of these embodiments of this application are further described below through specific examples.

## Preparation of inorganic coating

Boehmite inorganic particles with a $D_v50$ of 1 $\mu$m and polyacrylate were mixed in a mass ratio of 90:10 and dissolved in deionized water to form an inorganic coating slurry with a solid content of 50%. The resulting inorganic coating slurry was then uniformly applied to one surface of a PE base film using a micro-gravure coating method to form a heat-resistant layer, which was dried in an oven.

## Preparation of organic coating in first group of examples

In the first group of examples, an organic coating was prepared, based on parameters of a first polymer and a second polymer specified in each example in Table 1 below, by adding auxiliary components (thickener: sodium carboxymethyl cellulose; and wetting agents: sulfonate and dimethylsilane). The first polymer, second polymer, and auxiliary components totaled 100 parts by weight. Deionized water was then added and stirred to adjust a slurry viscosity to 50 mPa·s with a solid content of 5%, obtaining slurry A. The slurry A was uniformly applied to the inorganic coating surface of the PE base film to form a first coating with a weight of 0.2 $g/m^2$, and dried in an oven.

## Preparation of separator coating in comparative examples

In the comparative examples, an organic coating was prepared, based on parameters specified in each comparative example in Table 1 below, by adding auxiliary components (thickener: sodium carboxymethyl cellulose; and wetting agents: sulfonate and dimethylsilane). For Comparative Example 1-4, only a first polymer and auxiliary components were added, the first polymer and auxiliary components totaling 100 parts by weight. For Comparative Examples 1-1 to 1-3, the first polymer, second polymer, and auxiliary components were added, the first polymer, second polymer, and auxiliary components totaling 100 parts by weight, with the swelling degree of the second polymer in Comparative Example 1-3 being greater than 30%. Deionized water was then added and stirred to adjust a slurry viscosity to 50 mPa·s with a solid content of 5%, obtaining comparative slurry A. The comparative slurry A was uniformly applied to the inorganic coating surface of the PE base film to form a first coating in the comparative examples, the first coating of the comparative examples having a weight of 0.2 $g/m^2$, and dried in an oven.

## Preparation of high-adhesion coating

90 g of a high-molecular-weight polymer binder was added to a stirrer, followed by 0.5 g of sodium carboxymethyl cellulose, and mixed well. 8.5 g of the wetting agent dimethylsiloxane was added, followed by deionized water, and stirred to adjust a slurry viscosity to 40 mPa·s with a solid content of 5%, obtaining slurry B. The slurry B was uniformly coated on the other surface of the PE base film to form a second coating with a weight of 0.5 g/m$^2$, and dried in an oven.

**Preparation of positive electrode plate**

Positive electrode active materials: lithium cobalt oxide, acetylene black, and polyvinylidene fluoride (PVDF) were mixed in a mass ratio of 94:3:3, and solvent N-methylpyrrolidone (NMP) was added to form a slurry with a solid content of 75%, which was stirred well. The slurry was uniformly applied to one surface of a 12 μm thick aluminum foil, dried at 90°C, and cold-pressed to obtain a positive electrode plate with a positive electrode active material layer having a thickness of 100 μm. The above steps were repeated on the other surface of the positive electrode plate to obtain a positive electrode plate coated with the positive electrode active material layer on both surfaces. The positive electrode plate was cut into dimensions of 74 mm × 867 mm and welded with tabs for use.

**Preparation of negative electrode plate**

Negative electrode active materials: artificial graphite, acetylene black, styrene-butadiene rubber, and sodium carboxymethyl cellulose were mixed in a mass ratio of 96:1:1.5:1.5, and deionized water was added as a solvent to form a slurry with a solid content of 70% (mass percentage), which was stirred well. The slurry was uniformly applied to one surface of an 8 μm thick copper foil, dried at 110°C, and cold-pressed to obtain a negative electrode plate coated with a negative electrode active material layer on a single surface, the thickness of the negative electrode active material layer being 150 μm. The above coating steps were repeated on the other surface of the negative electrode plate to obtain a negative electrode plate coated with the negative electrode active material layer on both surfaces. The negative electrode plate was cut into dimensions of 74 mm × 867 mm and welded with tabs for use.

Preparation of electrolyte

In an environment with a water content of less than 10 ppm, non-aqueous organic solvents ethylene carbonate (EC), diethyl carbonate (DEC), propylene carbonate (PC), and propyl propionate (PP) were mixed in a mass ratio of 2:3:2:3. Lithium hexafluorophosphate (LiPF$_6$) was then added to the non-aqueous organic solvent, dissolved, and mixed well to obtain the electrolyte, with a ratio of LiPF$_6$ to EC, DEC, PC, and PP of 8.7:20:30:20:30.

**Preparation of lithium-ion battery**

The prepared positive electrode plate, separator, and negative electrode plate were stacked in order, with the side of the separator having the first coating in contact with the positive electrode plate and the side of the separator with the second coating in contact with the negative electrode plate, and wound to obtain an electrode assembly. The electrode assembly was placed in an aluminum-plastic film packaging bag, dehydrated at 80°C, injected with the prepared electrolyte, and subjected to vacuum encapsulation, standing, formation, and shaping processes to obtain a lithium-ion battery.

**Adhesion force test between separator and electrode plate**

The adhesion force between the separator and the positive electrode plate or negative electrode plate was tested according to the national standard GB/T 2790-1995, that is, 180° peel test standard. The separator and positive electrode plate were cut into samples of 54.2 mm×72.5 mm, and then the separator and positive electrode plate were composited, and hot-pressed using a hot press under conditions of 85°C, 1 MPa pressure, and 85s (seconds). The composited sample was cut into strips of 15 mm × 54.2 mm, and the adhesion force between the separator and the positive electrode plate at room temperature (25°C) was tested according to the 180° peel test standard.

**Hot box window test**

I. Pre-treatment full charge process for cells:

(1) Test temperature was set to 25°C.
(2) The cells were left standing for 30 min.
(3) The cells were charged at a constant current of 0.2C to 4.5 V, and then charged at a constant voltage of 4.5 V to a cut-off current of 0.025C.

II. Test process:

(1) The appearance was inspected and photographed before and after the test.
(2) Temperature sensing lines were attached at corresponding positions.
(3) Samples were vertically placed in a box, heated at a rate of 6°C to 130°C, and maintained for 60 min.
(4) Measurement frequency was set: voltage and internal resistance were measured, using 1 kHz specification, after pre-treatment and after the test.
(5) Pass criteria were made: no fire, no explosion, no smoke.

**Cycling performance test**

Preparation process before cycling: the cells were left standing for 30 min at a test temperature of 25°C and then discharged at a current density of 0.2C to 3 V.
The cells were then left standing for 30 min again, charged at a constant current of 0.5C to 4.48 V, then charged at constant voltage to 0.02C, left standing for 30 min, discharged at a current density of 0.2C to 3 V, and left standing 30 min.

Cycling process:

Test process: the cells were left standing for 30 min at a test temperature of 25°C, then charged at a constant current of 12.4 A to 4.22 V and charged at constant voltage to 1.8C. Subsequently, the cells were charged at a constant current of 1.8C to 4.3 V and charged at constant voltage to 1.5C. They were then charged at a constant current of 1.5C to 4.48 V and charged at constant voltage to 1.2C. Next, the cells were charged at a constant current of 1.2C to 4.53 V and charged at constant voltage to 0.26C. After being left standing for 5 min, the cells were discharged at a current density of 0.7C to 3.2 V. Finally, the cells were left standing for 5 min. Steps 3 to 9 were repeated for 800 cycles.
High-temperature cycling test was performed as above, but the temperature condition was set to 45°C.

**Swelling degree test method**

Preparation of adhesive film: the cell was disassembled, and the separator was removed. The removed separator with length and width greater than 10 cm was dissolved in the organic solvent NMP at a solvent-to-solution ratio of 1:9. A beaker containing suspension was placed on a disperser and stirred thoroughly for 1.5 h. The stirred solution was left standing for 30 min to remove bubbles. The solution was filtered through a mesh to remove insoluble impurities and the base film. It was then poured into a mold for preparing the adhesive film, with any bubbles removed in advance. The mold was placed in an oven at a set temperature of 60°C for 12 h.
The prepared adhesive film was cut into strips weighing approximately 2 g using scissors, and 2 or 3 parallel samples were prepared for each type of adhesive film. Each adhesive film strip was weighed and its initial weight M1 was recorded. The strips were placed in small bottles, and the sample names were labeled. The electrolyte was added until it covered the strips by 2 cm to 3 cm. The small bottles were sealed and placed in an oven at 60°C for a swelling test duration of 24 h. During the test, the adhesive film was removed, wiped clean with dust-free paper, and its weight M2 was recorded at each time point, where

$$\text{swelling degree} = (M2-M1)/M1.$$

**Table 1**

| Organic coating | First polymer | | | | Second polymer | | | Hot box test pass rate | Test result — Capacity retention rate after room temperature cycling test at 25°C and 4C for 800 cycles (%) | Test result — Adhesion force between separator and positive electrode plate |
| | Component | Melting point (°C) | $D_v50$ (μm) | Weight parts | Component | Swelling degree D after 24-h standing at 60°C | Weight parts | | | |
|---|---|---|---|---|---|---|---|---|---|---|
| Example 1-1 | Polypropylene | 60 | 1.3 | 65 | Polystyrene | 20% | 30 | 95% | 81.0 | 8.5 |
| Example 1-2 | Polypropylene | 75 | 1.3 | 65 | Polystyrene | 20% | 30 | 93% | 82.5 | 7.9 |
| Example 1-3 | Polypropylene | 85 | 1.3 | 65 | Polystyrene | 20% | 30 | 90% | 82.7 | 7.2 |
| Example 1-4 | Polypropylene | 90 | 1.3 | 65 | Polystyrene | 20% | 30 | 88% | 83.6 | 6.6 |
| Example 1-5 | Polypropylene | 100 | 1.3 | 65 | Polystyrene | 20% | 30 | 86% | 84.5 | 5.9 |
| Example 1-6 | Polypropylene | 100 | 1.3 | 40 | Polystyrene | 20% | 50 | 81% | 84.3 | 5.3 |
| Example 1-7 | Polypropylene | 100 | 1.3 | 60 | Polystyrene | 20% | 30 | 84% | 82.5 | 5.4 |
| Example 1-8 | Polypropylene | 100 | 1.3 | 50 | Polystyrene | 20% | 40 | 82% | 83.1 | 5.7 |
| Example 1-9 | Polypropylene | 100 | 1.3 | 90 | Polystyrene | 20% | 5 | 88% | 81.2 | 6.9 |
| Example 1-10 | Polypropylene | 100 | 1.3 | 95 | Polystyrene | 20% | 5 | 87% | 80.3 | 7.3 |
| Example 1-11 | Polypropylene | 100 | 1.3 | 90 | Polystyrene | 30% | 5 | 89% | 80.2 | 7.1 |
| Example 1-12 | Polypropylene | 100 | 1.3 | 30 | Polystyrene | 20% | 60 | 80% | 83.0 | 5.1 |
| Example 1-13 | Polypropylene | 75 | 0.5 | 80 | Polystyrene | 20% | 10 | 91% | 83.4 | 8.6 |
| Example 1-14 | Polypropylene | 75 | 0.7 | 80 | Polystyrene | 20% | 10 | 92% | 82.2 | 8.1 |
| Example 1-15 | Polypropylene | 75 | 1 | 80 | Polystyrene | 20% | 10 | 95% | 81.9 | 7.8 |
| Example 1-16 | Polypropylene | 75 | 2 | 80 | Polystyrene | 20% | 10 | 96% | 81.3 | 7.4 |
| Example 1-17 | Polypropylene | 75 | 0.3 | 80 | Polystyrene | 20% | 10 | 88% | 83.7 | 8.7 |

| Organic coating | First polymer | | | | Second polymer | | | Test result | | Test result |
|---|---|---|---|---|---|---|---|---|---|---|
| | Component | Melting point (°C) | $D_v50$ (μm) | Weight parts | Component | Swelling degree D after 24-h standing at 60°C | Weight parts | Hot box test pass rate | Capacity retention rate after room temperatur e cycling test at 25°C and 4C for 800 cycles (%) | Adhesion force between separator and positive electrode plate |
| Example 1-18 | Polypropylene | 75 | 2.2 | 80 | Polystyrene | 20% | 10 | 85% | 80.5 | 7.0 |
| Example 1-19 | Polypropylene (containing 3% graft copolymer) | 75 | 1.3 | 65 | Polystyrene | 20% | 30 | 96% | 83.5 | 7.7 |
| Example 1-20 | Polypropylene (containing 10% graft copolymer) | 75 | 1.3 | 65 | Polystyrene | 20% | 30 | 100% | 84.6 | 8.4 |
| Example 1-21 | Polypropylene (containing 2% graft polymer) | 75 | 1.3 | 65 | Polystyrene | 20% | 30 | 90% | 82.6 | 7.1 |
| Comparative Example 1-1 | Polypropylene | 50 | 1.3 | 95 | Polystyrene | 20% | 30 | 97% | 78.7 | 9.2 |
| Comparative Example 1-2 | Polypropylene | 110 | 1.3 | 95 | Polystyrene | 20% | 30 | 60% | 79.0 | 4.7 |
| Comparative Example 1-3 | Polypropylene | 75 | 1.3 | 90 | Polystyrene | 33% | 5 | 60% | 79.5 | 8.9 |
| Comparative Example 1-4 | Polypropylene | 100 | 1.3 | 95 | / | / | / | 55% | 77.5 | 4.9 |

Based on the test results in Table 1, it can be seen that the hot box test pass rates of the batteries in Examples 1-1 to 1-21 all reach 80% or higher and are significantly higher than those of the batteries in Comparative Examples 1-2 to 1-4. The capacity retention rates of the batteries in Examples 1-1 to 1-21 after the room temperature cycling test at 25°C and 4C for 800 cycles all reach 80% or higher. It can be concluded that by using an organic coating containing a low-melting-point first polymer and a low-swelling-degree second polymer as described in this application, the hot box test pass rate of the battery can be effectively improved while ensuring cycling performance of the battery at room temperature.

**Preparation of organic coating in second group of examples**

In the second group of examples, an organic coating was prepared, based on parameters of a first polymer and a second polymer specified in Table 2 below, by adding auxiliary components (thickener: sodium carboxymethyl cellulose; and wetting agents: sulfonate and dimethylsilane). The first polymer was 65 parts by weight, the second polymer was 30 parts by weight, and the auxiliary components were 5 parts by weight. Deionized water was added and stirred to adjust a slurry viscosity to 50 mPa·s with a solid content of 5%, obtaining slurry A. The slurry A was uniformly applied to the inorganic coating surface of the PE base film to form a first coating, the weight of the first coating being 0.2 g/m$^2$, and dried in an oven. The proportion of cyclic carboxylate esters (for example, EC) in the electrolyte was correspondingly increased to meet the regulation of the percentage of linear carboxylate esters described below.

For other steps and parameters of the second group of examples, refer to the steps and parameters of the first group of examples to produce lithium-ion batteries.

Table 2

| Organic coating | First polymer | | | | Second polymer | Electrolyte | Coefficient K | High-temperature cycling performance |
| | Component | Melting point (°C) | $D_v50$ (μm) | Swelling degree D at 60°C (24 h) | Component | Percentage H of linear carboxylate esters | K | Capacity retention rate after 800 cycles at 4C (%) |
| --- | --- | --- | --- | --- | --- | --- | --- | --- |
| Example 2-1 | Polypropylene | 75 | 1.3 | 10.1% | Polystyrene | 10% | 0.01 | 87.8 |
| Example 2-2 | Polypropylene | 75 | 1.3 | 10.3% | Polystyrene | 10% | 0.03 | 86.5 |
| Example 2-3 | Polypropylene | 75 | 1.3 | 10.5% | Polystyrene | 10% | 0.05 | 86.6 |
| Example 2-4 | Polypropylene | 75 | 1.3 | 10.8% | Polystyrene | 10% | 0.08 | 85.2 |
| Example 2-5 | Polypropylene | 75 | 1.3 | 11.6% | Polystyrene | 20% | 0.08 | 83.8 |
| Example 2-6 | Polypropylene | 75 | 1.3 | 12.4% | Polystyrene | 30% | 0.08 | 82.9 |
| Example 2-7 | Polypropylene | 75 | 1.3 | 13.2% | Polystyrene | 40% | 0.08 | 81.8 |
| Example 2-8 | Polypropylene | 75 | 1.3 | 14.0% | Polystyrene | 50% | 0.08 | 80.5 |
| Example 2-9 | Polypropylene | 75 | 1.3 | 15.4% | Polystyrene | 60% | 0.09 | 76.5 |
| Example 2-10 | Polypropylene | 75 | 1.3 | 10.04% | Polystyrene | 8% | 0.005 | 79.0 |

Based on the test results in Table 2, it can be seen that the swelling degree D of the second polymer and the percentage H of linear carboxylate esters in the electrolyte satisfy the formula D = K*H + 0.1, where $0.01 \leq K \leq 0.08$. By controlling the reasonable percentage of linear carboxylate esters in the electrolyte and matching it with an appropriate swelling degree of the second polymer, the high-temperature cycling performance of the battery can be improved.

**Preparation of organic coating in third group of examples**

In the third group of examples, an organic coating was prepared, based on parameters of a first polymer and a second polymer specified in Table 3 below, by adding auxiliary components (thickener: sodium carboxymethyl cellulose; and wetting agents: sulfonate and dimethylsilane). The first polymer was 65 parts by weight, the second polymer was 30 parts by weight, and the auxiliary components were 5 parts by weight. Deionized water was added and stirred to adjust a slurry viscosity to 50 mPa·s with a solid content of 5%, obtaining slurry A. The slurry A was uniformly applied to the inorganic coating surface of the PE base film to form a first coating, with a weight of the first coating being 0.2 $g/m^2$, and dried in an oven.

For other steps and parameters of the third group of examples, refer to the steps and parameters of the first group of examples to produce lithium-ion batteries.

**Table 3**

| Organic coating | First polymer | | | Second polymer | | | Cycling performance |
| | Component | Melting point | $D_v50$ ($\mu$m) | Component | Sphericity | Swelling degree D at 85°C (24 h) | Capacity retention rate after 800 cycles at 25°C and 4C (%) |
|---|---|---|---|---|---|---|---|
| Example 3-1 | Polypropylene | 75 | 1.3 | Polystyrene | 0.7 | 30% | 85.9 |
| Example 3-2 | Polypropylene | 75 | 1.3 | Polystyrene | 0.8 | 30% | 87.8 |
| Example 3-3 | Polypropylene | 75 | 1.3 | Polystyrene | 0.75 | 30% | 86.5 |
| Example 3-4 | Polypropylene | 75 | 1.3 | Polystyrene | 0.9 | 30% | 88.2 |
| Example 3-5 | Polypropylene | 75 | 1.3 | Polystyrene | 0.6 | 30% | 85.0 |
| Example 3-6 | Polypropylene | 75 | 1.3 | Polystyrene | 0.9 | 50% | 87.1 |
| Example 3-7 | Polypropylene | 75 | 1.3 | Polystyrene | 0.9 | 40% | 87.5 |
| Example 3-8 | Polypropylene | 75 | 1.3 | Polystyrene | 0.9 | 20% | 88.1 |
| Example 3-9 | Polypropylene | 75 | 1.3 | Polystyrene | 0.9 | 10% | 89 |
| Example 3-10 | Polypropylene | 75 | 1.3 | Polystyrene | 0.9 | 60% | 85.9 |

Based on the test results in Table 3, it can be seen that setting a relatively high sphericity and a relatively low swelling degree (at 85°C) for the second polymer is beneficial to improving the rate performance of the battery.

It should be noted that the above are only specific embodiments of this application, but the protection scope of this application is not limited thereto. Any person skilled in the art can easily conceive of changes or substitutions within the technical scope disclosed by this application, and such changes or substitutions should be included within the protection scope of this application. In the absence of conflict, some embodiments and features of these embodiments of this application can be combined with each other. Therefore, the protection scope of this application should be based on the protection scope of the claims.

**Claims**

1. A separator, comprising:

   a base film; and
   an organic coating disposed on one surface of the base film, the organic coating containing a first polymer and a second polymer; wherein
   a melting point T of the first polymer satisfies 60°C ≤ T ≤ 100°C; and
   a swelling degree D of the second polymer during placement in a solution at 60°C for 24 h satisfies D ≤ 30%, wherein the solution has a mass ratio of lithium hexafluorophosphate, ethylene carbonate, diethyl carbonate, propylene carbonate, and propyl propionate of 8.7:20:30:20:30.

2. The separator according to claim 1, wherein a median particle size Dv50 of the first polymer satisfies 0.5 μm < Dv50 < 2 μm.

3. The separator according to claim 1, wherein in the organic coating, a weight percentage of the first polymer is greater than or equal to 40% and less than or equal to 95%, and a weight percentage of the second polymer is less than or equal to 50%.

4. The separator according to claim 1, wherein in the organic coating, a weight percentage of the first polymer is greater than or equal to 60% and less than or equal to 95%, and a weight percentage of the second polymer is less than or equal to 30%.

5. The separator according to claim 1, wherein when the separator is applied to an electrochemical battery cell, the swelling degree D of the second polymer and a percentage H of linear carboxylate esters in the electrolyte satisfy D = K*H + 0.1, wherein 0.01 ≤ K ≤ 0.08.

6. The separator according to claim 5, wherein 10% ≤ H ≤ 50%.

7. The separator according to claim 1, wherein a median particle size $D_v50$ of the first polymer satisfies 1.0 μm ≤ $D_v50$ ≤ 2 μm.

8. The separator according to claim 1, wherein the melting point T of the first polymer satisfies 60°C ≤ T ≤ 85°C.

9. The separator according to claim 1, wherein the second polymer is spherical or quasi-spherical, and a sphericity R of the second polymer satisfies 0.7 ≤ R < 1.

10. The separator according to claim 1, wherein the second polymer is spherical or quasi-spherical, and a sphericity R of the second polymer satisfies 0.8 ≤ R < 1.

11. The separator according to claim 1, wherein the swelling degree D of the second polymer during placement in the electrolyte at 85°C for 24 h satisfies 10% ≤ D ≤ 50%.

12. The separator according to claim 1, wherein the first polymer comprises a graft copolymer, a monomer of a polymer backbone in the graft copolymer comprises at least one of ethylene, propylene, vinylidene fluoride, acrylic acid, acrylate, styrene, acrylonitrile, maleic anhydride, vinyl chloride, or chloropropene, and a monomer used for grafting comprises at least one of maleic anhydride, acrylate, or acrylic acid; and a weight percentage of the graft copolymer in the first polymer is greater than or equal to 3% and less than or equal to 10%.

13. The separator according to claim 1, wherein the second polymer comprises a polymer of at least one monomer of vinylidene fluoride, hexafluoropropylene, propylene, vinyl chloride, styrene, butadiene, acrylate, or acrylic acid, and the second polymer is at least one of a homopolymer, copolymer, or blended polymer.

14. A secondary battery, comprising a positive electrode plate, a negative electrode plate, and a separator disposed between the positive electrode plate and the negative electrode plate, wherein the separator is the separator according to any one of claims 1 to 13, and the organic coating is located between the positive electrode plate and the base film.

15. An electrochemical device, comprising a positive electrode plate, a negative electrode plate, and a separator disposed between the positive electrode plate and the negative electrode plate, wherein the separator is the separator according to any one of claims 1 to 13, and the organic coating is located between the positive electrode plate and the base film.

16. An electric device, comprising the electrochemical device according to claim 15 or the secondary battery according to claim 14.

FIG. 1

FIG. 2

## INTERNATIONAL SEARCH REPORT

| International application No. |
| --- |
| **PCT/CN2023/112469** |

### A. CLASSIFICATION OF SUBJECT MATTER

H01M50/449(2021.01)i; H01M50/46(2021.01)i; H01M50/414(2021.01)i

According to International Patent Classification (IPC) or to both national classification and IPC

### B. FIELDS SEARCHED

Minimum documentation searched (classification system followed by classification symbols)

IPC: H01M50

Documentation searched other than minimum documentation to the extent that such documents are included in the fields searched

Electronic data base consulted during the international search (name of data base and, where practicable, search terms used)

CNTXT, ENTXTC, CNKI, ENTXT, ISI_Web of Science: 二次电池, 隔离膜, 第二聚合物, 第一聚合物, 溶胀度, secondary d battery, first d polymer, second d polymer, swelling d degree

### C. DOCUMENTS CONSIDERED TO BE RELEVANT

| Category* | Citation of document, with indication, where appropriate, of the relevant passages | Relevant to claim No. |
| --- | --- | --- |
| A | CN 115810873 A (CONTEMPORARY AMPEREX TECHNOLOGY CO., LTD.) 17 March 2023 (2023-03-17)<br>description, paragraphs 2-24 | 1-16 |
| A | CN 114144932 A (NINGDE AMPEREX TECHNOLOGY LTD.) 04 March 2022 (2022-03-04)<br>entire document | 1-16 |
| A | CN 114175384 A (NINGDE AMPEREX TECHNOLOGY LTD.) 11 March 2022 (2022-03-11)<br>entire document | 1-16 |
| A | WO 2022205156 A1 (NINGDE AMPEREX TECHNOLOGY LTD.) 06 October 2022 (2022-10-06)<br>entire document | 1-16 |
| A | WO 2023123220 A1 (CONTEMPORARY AMPEREX TECHNOLOGY CO., LTD.) 06 July 2023 (2023-07-06)<br>entire document | 1-16 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 December 2023** | **13 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/112469**

| Patent document cited in search report | | | Publication date (day/month/year) | Patent family member(s) | | | Publication date (day/month/year) |
|---|---|---|---|---|---|---|---|
| CN | 115810873 | A | 17 March 2023 | None | | | |
| CN | 114144932 | A | 04 March 2022 | WO | 2022205165 | A1 | 06 October 2022 |
| CN | 114175384 | A | 11 March 2022 | None | | | |
| WO | 2022205156 | A1 | 06 October 2022 | CN | 114175387 | A | 11 March 2022 |
| WO | 2023123220 | A1 | 06 July 2023 | None | | | |

Form PCT/ISA/210 (patent family annex) (July 2022)